# EUROPÄISCHE PATENTSCHRIFT

(11) **EP 0 304 064 B1**
(45) Veröffentlichungstag und Bekanntmachung des Hinweises auf die Patenterteilung: **27.10.1993**
(21) Anmeldenummer: 88113451.4
(22) Anmeldetag: 18.08.1988
(51) Int. Cl.: H04Q 3/52

(54) **Mehrstufige Koppelanordnung**
Connection system with several stages
Système de connexion à plusieurs étages

(30) Priorität: 20.08.1987 DE 3727827
(43) Veröffentlichungstag der Anmeldung: 22.02.1989
(73) Patentinhaber: SIEMENS AKTIENGESELLSCHAFT, 80333 München (DE)
(72) Erfinder: Pfaff, Jürgen, Dr. rer. nat., Hillsborough, CA 94010 (US)

(56) Entgegenhaltungen:
- WO-A-87/04886
- US-A- 4 011 543

## Beschreibung

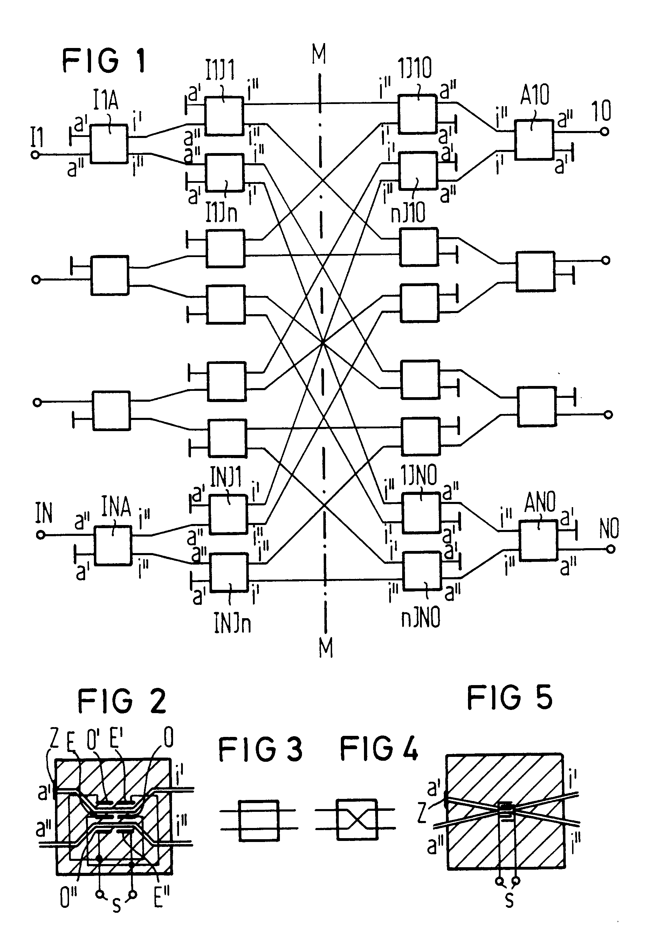

Neuere Entwicklungen der Fernmeldetechnik führen zu Lichtwellenleiter-(LWL-)Kommunikationssystemen, in denen nicht nur die zwischen Vermittlungsstelle und Teilnehmerstellen verlaufenden Teilnehmeranschlußleitungen durch Lichtwellenleiter gebildet sind (DE-B-2 421 002), sondern in denen auch die Verbindungsdurchschaltung in der Vermittlungsstelle mit Hilfe von lichtleitenden IO-(Integrierte-Optik-)2x2-Schaltelementen z.B. in Form von steuerbaren elektrooptischen Richtkopplern bewirkt werden kann (ISS'84 Conference Papers 41A4, Fig. 3, 5, 6 und 8; 1986 International Zürich Seminar Conf. Papers C7, Fig.1, 2, 4).

Bei einem steuerbaren elektrooptischen Richtkoppler sind zwei Streifenwellenleiter - das sind durch Eindiffusion (z.B. von Titan in Lithiumniobat) in einem Substrat erzeugte schmale dünne Streifen, die eine größere optische Brechzahl als das Substrat haben, - in einem Koppelbereich bestimmter Länge sehr eng, in einem Abstand von typischerweise etwa 5µm, nebeneinander geführt, so daß sich die optischen Felder überlappen und Lichtenergie von dem einen Streifenwellenleiter auf den anderen Streifenwellenleiter übergekoppelt werden kann; im Koppelbereich neben und zwischen den Streifenwellenleitern befinden sich Steuerelektroden, die mit einem die Überkopplung beeinflussenden elektrischen Steuersignal beaufschlagt sind: Bei Anliegen einer entsprechenden Steuerspannung findet keine Überkopplung statt; das Fehlen einer Steuerspannung kann mit einer vollständigen Überkopplung verbunden sein (ntz 39(1986)12, 828...830, Bild 3c und 3d; telcom report 10(1987)2, 90...98, Bild 8).

Nachdem in der Vermittlungstechnik 2x2-Koppelelemente, die nur zweier Schaltzustände - nämlich ungekreuzte Durchschaltung und gekreuzte Durchschaltung - fähig sind, auch als Binärkoppler bezeichnet werden (DE-B-2 036 176), können als 2x2-Koppelelemente eingesetzte steuerbare elektrooptische Richtkoppler auch als optische Binärkoppler angesprochen werden.

Mit Binärkopplern können auch grössere Koppelanordnungen gebildet werden (DE-B-2 036 176; ISS'84 Conf. Papers a.a.O.; 1986 Intern. Zürich Seminar Conf. Papers a.a.O); mit wenigstens fünf in drei Stufen angeordneten, auf einem IO-(Integrierte-Optik-)Baustein enthaltenen optischen Binärkopplern lässt sich z.B. eine optische 4x4-Koppelanordnung realisieren (ElectronicsWeek March 18, 1985, 55...58, Fig. 7).

Daß bei mit Binärkopplern gebildeten Koppelanordnungen die einzelnen Binärkoppler sich jeweils stets in dem einen oder in dem anderen Durchschaltezustand befinden, - einer mit optischen Binärkopplern gebildeten Koppelanordnung sind bei einem z.B. durch den Ausfall der Versorgungsspannung bedingten Fehlen aller Steuerspannungen alle Binärkoppler im Zustand der gekreuzten Durchschaltung, - macht ggf. die Vermeidung unerwünschter Verbindungen zu einem Problem.

Die Erfindung stellt sich nun die Aufgabe, eine Koppelanordnung anzugeben, in der in einem solchen Fall dennoch kein Koppelfeldanschluß mit einem anderen Koppelfeldanschluß verbunden ist.

Die Erfindung betrifft eine mehrstufige Koppelanordnung mit einer Mehrzahl von symmetrisch zur Koppelfeldmittellinie miteinander verbundenen optischen Binärkopplern; diese Koppelanordnung ist erfindungsgemäß dadurch gekennzeichnet, daß jeder Koppelfeldanschluß die Spitze einer koppelfeldanschlußindividuellen, jeweils vor der Koppelfeldmittellinie endenden Pyramide von optischen Binärkopplern bildet, in der jeder optische Binärkoppler auf der der Koppelfeldmittellinie abgewandten Seite in dem einen seiner beiden Lichtleitpfade unbeschaltet ist und die über die Koppelfeldmittellinie hinweg mit jeder auf deren anderer Seite liegenden Binärkopplerpyramide derart lichtleitend verbunden ist, daß jeder von einem Koppelfeldanschluß ausgehende bzw. zu einem Koppelfeldanschluß hinführende Koppelfelddurchschaltepfad bei gekreuzter Durchschaltung aller Binärkoppler einen solchen unbeschalteten Lichtleiterpfad eines optischen Binärkopplers enthält.

Es sei an dieser Stelle bemerkt, daß (z.B. aus DE-B-582 206 oder aus DE-B-1 115 775) Relais-Umschaltkontakt-Pyramiden und (z.B. aus EP-A-O 146 275) auch andere mit einfachen Umschaltern gebildete Koppelfeldstrukturen bekannt sind. Probleme einer Vermeidung unerwünschter Verbindungen bei Spannungsausfall in einer mit optischen Binärkopplern gebildeten Koppelanordnung bleiben dabei unberührt; hierzu zeigt aber die Erfindung einen Weg.

Die Erfindung bringt den Vorteil mit sich, in einer mit optischen Binärkopplern gebildeten Koppelanordnung unerwünschte Verbindungen von Koppelfeldanschlüssen bei Ausfall der Binärkoppler-Steuerspannungen vermeiden zu können.

Weitere Besonderheiten der Erfindung werden aus der nachfolgenden näheren Erläuterung eines Ausführungsbeispiels anhand der Zeichnung ersichtlich. Dabei zeigt
- FIG 1: ein Ausführungsbeispiel einer Koppelanordnung gemäß der Erfindung;
- FIG 2 und FIG 5: zeigen jeweils schematisch einen darin enthaltenen optischen Binärkoppler in Form eines steuerbaren elektrooptischen Richtkopplers bzw. eines Bragg-Reflektors.
- FIG 3 und FIG 4: verdeutlichen die beiden Durchschaltzustände solcher Binärkoppler.

In FIG 1 ist schematisch in einem zum Verständnis der Erfindung erforderlichen Umfange ein Ausführungsbeispiel einer mehrstufigen Koppelanordnung gemäß der Erfindung dargestellt, die mit einer Mehrzahl von symmetrisch zu einer Koppelfeldmittellinie M - M stufenweise miteinander verbundenen optischen Binärkopplern I1A, ...,INA; I1J1,...,INJn; 1J10,...,nJN0; A10,...,AN0 gebildet ist; diese Binärkoppler sind zu koppelfeldanschlußindividuellen Pyramiden gruppiert, deren Spitze vom jeweiligen Koppelfeldanschluß gebildet wird und deren Basis jeweils vor der Koppelfeldmittellinie M - M liegt.

Optische Binärkoppler sind beispielsweise in Form von steuerbaren elektrooptischen Richtkopplern an sich (z.B. aus den dazu eingangs genannten Literaturstellen) bekannt; sie sind jeweils nur zweier Schaltzustände fähig, nämlich des Zustands einer ungekreuzten Durchschaltung, wie dies in FIG 3 angedeutet ist, und des Zustands einer gekreuzten Durchschaltung, wie dies in FIG 4 angedeutet ist. FIG 2 zeigt schematisch einen solchen mit einem steuerbaren elektrooptischen Richtkoppler gebildeten optischen Binärkoppler in wesentlichen Einzelheiten:

In ein Substrat, z.B. Lithiumniobat, sind zwei Streifenwellenleiter a′ - i′ und a˝ - i˝ eindiffundiert; in dem eine bestimmte Länge aufweisenden eigentlichen Koppelbereich sind die beiden Streifenwellenleiter eng, in einem Abstand von typischerweise etwa 5 µm, nebeneinander geführt, so daß Lichtenergie vom jeweils einen auf den jeweils anderen Streifenwellenleiter übergekoppelt werden kann. Im Koppelbereich befinden sich Steuerelektroden E, E′, E˝ und O, O′, O˝, die von Steuersignalklemmen s her mit einer entsprechenden elektrischen Steuerspannung beaufschlagt sein können, so daß keine Überkopplung stattfindet; der Binärkoppler befindet sich dann im Zustand der ungekreuzten Durchschaltung, in dem z.B. in den Lichtleiterpfad a˝ eintretendes Licht aus dem Lichtleiterpfad i˝ wieder austritt. Im Zustand einer gekreuzten Durchschaltung, in dem z.B. in den Lichtleiterpfad a˝ eintretendes Licht aus dem Lichtleiterpfad i′ wieder austritt, befindet sich ein solcher optischer Binärkoppler bei - etwa durch einen Versorgungsspannungsausfall bedingt - fehlender Steuerspannung. Dementsprechend ist dann, um wieder auf FIG 1 zurückzukommen, in der dort skizierten Koppelanordnung beispielsweise bei ungekreuzter Durchschaltung der zwei Binärkoppler INA und nJ10 und Gekreuzter Durchschaltung der zwei Binärkoppler INJ1 und A10 der Koppelfeldanschluß IN mit dem Koppelfeldanschluß 10 lichtleitend verbunden, und es ist beispielsweise bei ungekreuzter Durchschaltung der beiden Binärkoppler I1A and 1JN0 und gekreuzter Durchschaltung der beiden Binärkoppler I1Jn und AN0 der Koppelfeldanschluß I1 mit dem Koppelfeldanschluß N0 lichtleitend verbunden.

Bei einem z.B. durch einen Versorgungsspannungsausfall bedingten Fehlen aller Steuerspannungen befinden sich alle Binärkoppler der in FIG 1 skizzierten Koppelanordnung im Zustand der gekreuzten Durchschaltung. Um nun sicherzustellen, daß dabei dennoch kein Koppelfeldanschluß mit einem anderen Koppelfeldanschluß verbunden ist, ist jeder optische Binärkoppler der einzelnen koppelfeldanschlußindividuellen Pyramiden von optischen Binärkopplern auf der der Koppelfeldmittellinie M - M angewandten Seite in dem einen seiner beiden Lichtleitpfade unbeschaltet; über Koppelfeldmittellinie M - M hinweg sind die Binärkoppler-Pyramiden mit jeder auf der anderen Seite liegenden Binärkoppler-Pyramide derart lichtleitend verbunden, daß jeder von einem Koppelfeldanschluß ausgehende bzw. zu einem Koppelfeldanschluß hinführende Koppelfelddurchschaltepfad bei gekreuzter Durchschaltung aller Binärkoppler einen solchen unbeschalteten Lichtleiterpfad eines optischen Binärkopplers enthält. In FIG 1 und ebenso in FIG 2 ist der jeweils unbeschaltete Lichtleiterpfad eines optischen Binärkopplers jeweils mit a′ bezeichnet. Um störende Reflektionen in einem solchen unbeschalteten Lichtleiterpfad a′ zu vermeiden, kann dieser zweckmäßigerweise mit einem Lichtabsorber abgeschlossen sein, der auf ihn vom Lichtleiterpfad a′ her auftreffendes Licht völlig absorbiert; in FIG 2 ist eine solche lichtabsorbierende Schicht mit Z bezeichnet.

Kommt es nun zu einem Spannungsausfall, aufgrund dessen sämtliche optische Binärkoppler in den Zustand gekreuzter Durchschaltung gelangen, so wird in der in FIG 1 skizzierten Koppelanordnung beispielsweise eine vom Koppelfeldenanschluß I1 ausgehende Verbindung über die jeweils gekreuzt durchschaltenden Binärkoppler I1A, I1J1 und 1J10 zum unbeschalteten Lichtleiterpfad a′ des Binärkopplers 1J10 geführt und endet dort; in ähnlicher Weise sind auch alle übrigen Koppelfeldanschlüsse ...,IN; 10, ...,N0 über zwei oder drei jeweils gekreuzt durchschaltende optische Binärkoppler mit einem umbeschalteten Lichtleiterpfad a′ eines solchen Binärkopplers verbunden, ohne daß dies hier jeweils einzeln erläutert werden werden muß.

Bei der in FIG 1 skizzierten Koppelanordnung handelt es sich um eine 4-stufige 4x4-Koppelanordnung mit 2-stufigen koppelfeldanschlußindividuellen Binärkopplerpyramiden. Die Erfindung ist indessen auf eine solche Konfiguration nicht beschränkt; sie kann vielmehr ganz allgemein in 2n-stufigen NxN-Koppelanordnungen mit n-stufigen koppelfeldanschlußindividuellen Binärkopplerpyramiden (mit n = 1b N) Anwendung finden.

Ebenso ist die Erfindung nicht auf die in FIG 2 verdeutlichte Realisierung der Binärkoppler mit steuerbaren optoelektrischen Richtkopplern beschränkt; die Binärkoppler können vielmehr auch anders realisiert sein, etwa mit sog. Bragg-Reflektoren, wie dies in FIG 5 schematisch angedeutet ist: Hier sind in einen elektrooptischen Kristall, z.B. Lithiumniobat, durch Eindiffusion (z.B. von Titan) zwei sich unter dem Doppelten des sog. Bragg-Winkels kreuzende Streifenwellenleiter a′ - i˝ und a˝ - i′ gebildet, in deren Kreuzungsbereich eine fingerförmige Elektrodenstruktur vorgesehen ist, die von Steuersignalklemmen s her mit einer entsprechenden elektrischen Steuerspannung beaufschlagbar sind. Durch eine solche Steuerspannung kann auf Grund des elektrooptischen Effekts im Kreuzungsbereich ein Brechzahlgitter erzeugt werden, an dem unter dem Bragg-Winkel auftreffendes Licht abgelenkt wird, so daß auftreffendes Licht und abgelenktes Licht den doppelten Bragg-Winkel einschliessen (vgl. z.B. DE-A-3 025 083, FIG 1): Der Binärkoppler gemäß FIG 5 befindet sich dann im Zustand der ungekreuzten Durchschaltung, in dem z.B. in den Lichtleiterpfad a˝ eintretendes Licht aus dem Lichtleiterpfad i˝ wieder austritt.
Bei fehlender Steuerspannung kommt es nicht zu einer solchen Ablenkung des Lichts; der Binärkoppler befindet sich dann im Zustand der gekreuzten Durchschaltung, in dem z.B. in den Lichtleiterpfad a˝ eintretendes Licht aus dem Lichtleiterpfad i′ wieder austritt.
Der in FIG 5 mit a′ bezeichnete unbeschaltete Lichtleiterpfad des optischen Binärkopplers kann wiederum mit einer lichtabsorbierenden Schicht Z abgeschlossen sein.

## Patentansprüche

1. Mehrstufige Koppelanordnung mit einer Mehrzahl von symmetrisch zur Koppelfeldmittellinie (M-M) miteinander verbundenen optischen Binärkopplern (I1A, I1J1, I1Jn; ...; nJN0, 1JN0, AN0),
**dadurch gekennzeichnet,**
daß jeder Koppelfeldanschluß (I1 ..., IN; 10, ..., N0) die Spitze einer koppelfeldanschlußindividuellen, jeweils vor der Koppelfeldmittellinie (M - M) endenden Pyramide von optischen Binärkopplern (I1A, I1J1, I1Jn, ..., nJN0, 1JN0, AN0) bildet,
in der jeder optische Binärkoppler (I1A, I1J1, I1Jn; ...; nJN0, 1JN0, AN0) auf der der Koppelfeldmittellinie (M - M) abgewandten Seite in dem einen seiner beiden Lichtleitpfade (a') unbeschaltet ist
und die über die Koppelfeldmittellinie (M - M) hinweg mit jeder auf deren anderer Seite liegenden Binärkopplerpyramide (1J10, nJ10, A10; ...; 1JN0, nJN0, AN0; I1J1, I1Jn, I1A; ...; INJ1, INJn, INA) derart lichtleitend verbunden ist, daß jeder von einem Koppelfeldanschluß (I1, ..., IN) ausgehende bzw. zu einem Koppelfeldanschluß (10, ..., N0) hinführende Koppelfelddurchschaltepfad bei gekreuzter Durchschaltung aller Binärkoppler (I1A, ..., AN0) einen solchen unbeschalteten Lichtleiterpfad (a') eines optischen Binärkopplers enthält.

2. Koppelanordnung nach Anspruch 1,
**dadurch gekennzeichnet,**
daß der unbeschaltete Lichtleiterpfad (a') mit einem Lichtabsorber (Z) abgeschlossen ist.

## Claims

1. Multi-stage switching network having a plurality of optical binary couplers (I1A, I1J1, I1Jn; ...; nJN0, 1JN0, AN0) connected to one another symmetrically relative to the switching network centre line (M - M), characterised in that each switching network terminal (I1, ..., IN; 10, ..., N0) forms the apex of a pyramid of optical binary couplers (I1A, I1JI, I1Jn; ...; nJN0, 1JN0, AN0), which pyramid is individual to the switching network terminal and ends respectively before the switching network centre line (M - M), in which each optical binary coupler (I1A, I1J1, I1Jn; ...; nJN0, IJN0, AN0) is unconnected in the one of its two light-conducting paths (a') on the side averted from the switching network centre line (M - M), and which is connected in an optically conductive fashion beyond the switching network centre line (M - M) to every binary coupler pyramid (1J10, nJ10, A10; ...; 1JN0, nJN0, AN0; I1J1, I1Jn, I1A; ..., INJ1, INJn, INA) in such a way that each switching network through-connect path outgoing from a switching network terminal (I1, ..., IN) or leading to a switching network terminal (10, ..., N0) contains such an unconnected light-conducting path (a') of an optical binary coupler in the case of crossed through-connection of all the binary couplers (I1A, ..., AN0).

2. Switching network according to Claim 1, characterised in that the unconnected light-conducting path (a') is terminated by a light absorber (Z).

## Revendications

1. Dispositif de couplage à étages multiples, comportant une multiplicité de coupleurs optiques binaires (IA1, I1J1, I1Jn; ... ; nJN0, 1JN0, AN0), qui sont reliés entre eux symétriquement par rapport à la ligne médiane (M-M) du champ de couplage,
caractérisé par le fait
que chaque borne (I1, ..., IN; 10, ..., N0) du champ de couplage constitue la pointe d'une pyramide, qui est prévue pour chaque borne du champ de couplage et se termine respectivement en avant la ligne médiane (M - M) du champ de couplage et est formée de coupleurs optiques binaires (IA1, IJ1, I1Jn, ... , nJN0, 1JN0, AN0), et
dans laquelle chaque coupleur binaire optique (IA1, I1J1, I1Jn; ...; nJN0, 1JN0, AN0) n'est pas raccordé, sur le côté tourné à l'opposé de la ligne médiane (M - M) du champ de couplage, au niveau de l'une de ses deux voies (a') de transmission de la lumière, et
qui est raccordé, de manière à conduire la lumière, au-delà de la ligne médiane (M - M) du champ de couplage, à chaque pyramide de coupleurs binaires (1J10, nJ10, A10, ..., 1JN0, nJN0, AN0; I1J1, I1Jn, I1A; ...; INJ1, INJn, INA) située de l'autre côté de cette ligne, de telle sorte que chaque voie d'interconnexion du champ de couplage, qui part d'une borne (I1, ..., IN) du champ de couplage ou aboutit à une borne (10, ..., N0) du champ de couplage contient, dans le cas d'une interconnexion croisée de tous les coupleurs binaires (I1A, ..., AN0), une telle voie non raccordée (a') de conduction de lumière d'un coupleur optique binaire.

2. Dispositif de couplage suivant la revendication 1, caractérisé par le fait que la voie non raccordée (a') de guidage de la lumière est terminée par un absorbeur de lumière (Z).
